# EUROPEAN PATENT APPLICATION

(11) **EP 2 645 727 A2**
(43) Date of publication of application: **02.10.2013**
(21) Application number: 12737016.1
(22) Date of filing: 11.01.2012
(51) Int. Cl.: H04N 13/04, H04N 7/24

(54) **RECEPTION DEVICE FOR RECEIVING A PLURALITY OF REAL-TIME TRANSFER STREAMS, TRANSMISSION DEVICE FOR TRANSMITTING SAME, AND METHOD FOR PLAYING MULTIMEDIA CONTENT**

(30) Priority: 19.01.2011 US 201161434107 P; 09.03.2011 US 201161450818 P; 02.12.2011 KR 20110128644
(71) Applicant: Samsung Electronics Co., Ltd, Gyeonggi-do 443-742 (KR)
(72) Inventor: LEE, Jae-jun, Suwon-si Gyeonggi-do 443-769 (KR); JANG, Moon-seok, Seoul 152-055 (KR); PARK, Hong-seok, Anyang-si Gyeonggi-do 431-050 (KR); JOO, Yu-sung, Yongin-si Gyeonggi-do 448-130 (KR); KIM, Hee-jean, Yongin-si Gyeonggi-do 449-905 (KR); LEE, Dae-jong, Hwaseong-si Gyeonggi-do 445-738 (KR); JANG, Yong-seok, Hwaseong-si Gyeonggi-do 487-851 (KR); KIM, Yong-tae, Suwon-si Gyeonggi-do 443-795 (KR)
(74) Representative: Instone, Terry
(86) International application number: PCT/KR2012/000271
(87) International publication number: WO 2012/099359

(57) **Abstract**

Disclosed is a reception device. The reception device includes: a first reception unit receiving a first real-time transport stream via a broadcast network; a second reception unit receiving a second real-time transport stream via a communication network; a delay-processing unit delaying at least one of the first and second real-time transport streams for synchronization; a first detection unit detecting first data from the first real-time transport stream; a second detection unit detecting second data from a second real-time transport stream; a signal-processing unit combining the first data and the second data so as to constitute multimedia content; and a playing unit playing the multimedia content. Accordingly, the multimedia content may be stably played.

## Description

### [Technical Field]

Apparatuses and methods consistent with what is disclosed herein relate to a reception device for receiving a plurality of transport streams, and a transmission device and a method for playing multimedia content thereof, and more specifically, to a reception device and a transmission device which transmit and receive one multimedia content through different paths, and a playback method thereof.

### [Background Art]

Supportive of technological development, various types of electronic devices are developed and distributed. Representative examples of these electronic devices can be reception devices such as TV.

As performance of TV enhances recently, multimedia content such as 3D content is provided. Because 3D content includes left-eye images and right-eye images, content size is bigger than that of conventional 2D content.

However, transport bandwidth used in a broadcasting network is limited. To provide 3D content in a unified broadcasting network, there is a problem that resolution needs to be reduced and screen quality deteriorates.

To overcome the problem, technology that left-eye images and right-eye images are transmitted through different paths and combined in a reception device to generate 3D content is suggested. Therefore, searches are performed on a method for previously downloading at least one of images at unreal time and playing the downloaded images.

However, the above method may have a problem related to security of previously downloaded content and also has a difficulty in that high capacity storage device should be included to store the downloaded content. Further, in a live environment, because unreal time data cannot be previously downloaded, it may have a problem that delay cannot be avoided.

Thus, new technology which multimedia content can be played efficiently in a reception device is necessary.

### [Disclosure]

### [Technical Problem]

According to an embodiment, a technical objective is to provide a reception device which receives a plurality of real-time transport streams transmitted through different paths and plays multimedia content, a method for playing the multimedia content, and a transmission device which transmits the transport streams.

### [Technical Solution]

To achieve the objective mentioned above, according to an embodiment, a reception device is provided, which may include a first receiver which receives a first real-time transport stream through a broadcasting network, a second receiver which receives a second real-time transport stream through a communication network, a delay manager which synchronizes by delaying at least one of the first and second real-time transport streams, a first detector which detects a first data from the first real-time transport stream, a second detector which detects a second data from the second real-time transport stream, a signal processor which generates a multimedia content by combining the first and second data, and a playback unit which plays the multimedia content.

The first real-time transport stream may include address information, and the second receiver receives metadata files from server by accessing the server within the communication network with the address information and receives the second real-time transport stream by using the metadata files, and the metadata files may include information regarding sources of the second real-time transport stream.

The address information may be recorded on at least one of: reserved area within PMT of the first real-time transport stream, descriptor area within PMT, reserved area of the first real-time transport stream, private data area of the first real-time transport stream, reserved area within PES of the first real-time transport stream, private data area within PES of the first real-time transport stream, user area within ES header, private area within ES header, SEI if according to H.264 standard.

The second data may include a plurality of data units having at least one of size established adaptively according to situation of the communication network.

One of the first data and the second data may include left-eye image and the other may include right-eye image, and the multimedia content is 3D content.

The first real-time transport stream may include first synchronizing information, the second real-time transport stream may include second synchronizing information, and the first and second synchronizing information may include at least one of content start information to inform start point of the multimedia content, difference value of time stamps between the first data and the second data, and frame index.

The reception device may additionally include a controller which controls the signal processor to compensate at least one of time stamps in each frame included in the first data and time stamps in each frame included in the second data by using the first and second synchronizing information, and generate the multimedia content by combining each frame of the first and second data.

The first real-time transport stream may include a first synchronizing information, the second real-time transport stream may include a second synchronizing information, and the first and second synchronizing information may be time code information of image frames.

Meanwhile, according to an embodiment, a transmission device is provided, which may include a stream generator which generates a first real-time transport stream including a first data and a first synchronizing information, an output unit which outputs the first real-time transport stream, and a controller which controls the output unit to delay output timing of the first real-time transport stream adjusted for output timing of other transmission devices which output second real-time transport stream. The second real-time transport stream may include a second data and second synchronizing information, the first and second data may be data to generate one multimedia content, and the first and second synchronizing information may be information transmitted for synchronization of the first and second data.

Alternatively, a transmission device may include a stream generator which generates a first real-time transport stream comprising a first data and address information, and an output unit which outputs the first real-time transport stream, in which the address information may be address information regarding metadata files that a second data generating multimedia content with the first data can be obtained on a communication network.

According to an embodiment, a method of playing multimedia content at a reception device is provided, which may include receiving a first real-time transport stream from a broadcasting network, receiving a second real-time transport stream from a communication network, delaying at least one of the first and second real-time transport streams and synchronizing each other, detecting a first data from the first real-time transport stream and detecting a second data from the second real-time transport stream, generating a multimedia content by combining the first and second data, and playing the multimedia content.

The receiving the second real-time transport stream through the communication network may include detecting address information included in the first real-time transport streams, receiving metadata files from a server by accessing the server within the communication network with the address information, and receiving the second real-time transport stream by accessing sources of the second real-time transport stream with the metadata files.

One of the first and second data may include a left-eye image and the other may include a right-eye image, and the multimedia content is 3D content.

The second data may include a plurality of data units having at least one of sizes established adaptively according to situation of the communication network.

The first real-time transport stream may include first synchronizing information, the second real-time transport stream comprises second synchronizing information, and the first and second synchronizing information may include at least one of content start information to inform start point of the multimedia content, difference value of time stamps between the first data and the second data, frame index, and time code.

### [Advantageous Effects]

According to various embodiments, real-time transport streams can be received through a plurality of different paths and synchronized with each other. Thus, high quality of multimedia content can be played.

### [Brief descriptions of drawings]

FIG. 1 illustrates a multimedia content transmitting and receiving system according to an embodiment,

FIG. 2 illustrates a reception device according to an embodiment;

FIG. 3 is provided to explain a process of synchronizing and playing transport stream in the reception device;

FIG. 4 is provided to explain a process of synchronizing with minimized delay time;

FIG. 5 is provided to explain an operation of receiving a plurality of real-time transport streams through a broadcasting network and a communication network;

FIGS. 6 to 9 are provided to explain methods of delivering address information in HTTP method;

FIG. 10 illustrates constitution of HTTP stream including media presentation description (MPD) files;

FIG. 11 illustrates constitution of HTTP stream including synchronizing information;

FIG. 12 is provided to explain a transmission process which divides and transmits multimedia content into a plurality of streams;

FIG. 13 is provided to explain a process of obtaining transport stream in a multimedia content transmitting and receiving system;

FIG. 14 illustrates constitution of stream in which synchronizing information is included in program map table (PMT);

FIG. 15 illustrates constitution of PMT in which synchronizing information is recorded;

FIG. 16 is provided to explain a method of delivering synchronizing information by using TS adaptation field;

FIG. 17 is provided to explain a method of delivering synchronizing information by using program elementary stream (PES) header;

FIG. 18 is provided to explain a method of delivering synchronizing information by using event information table (EIT);

FIG. 19 is provided to explain a method of delivering synchronizing information by using private stream;

FIG. 20 is provided to explain a method of delivering frame index by using PMT;

FIG. 21 is provided to explain a method of delivering frame index by using private stream;

FIG. 22 illustrates a plurality of transport streams allocated with time codes respectively;

FIGS. 23 to 26 illustrate various examples regarding a method of transmitting respective synchronizing information;

FIGS. 27 to 29 are block diagrams of a reception device according to various embodiments;

FIG. 30 is a flowchart provided to explain a method of playing multimedia content according to an embodiment; and

FIG. 31 is a flowchart provided to explain a method of obtaining second real-time transport stream by using address information included in first real-time transport stream.

### [Best Mode]

Certain exemplary embodiments of the present inventive concept will now be described in greater detail with reference to the accompanying drawings.

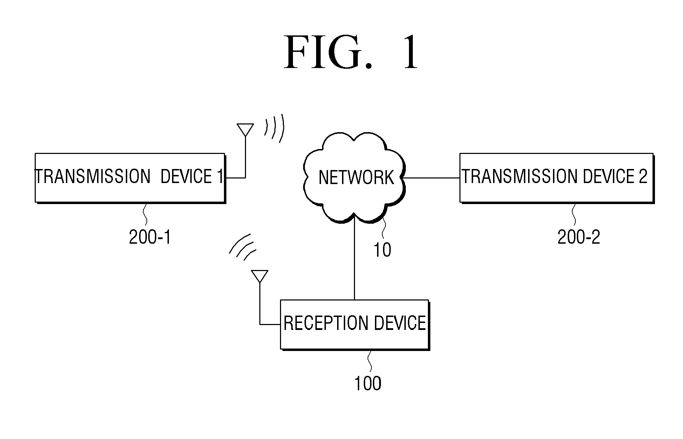

FIG. 1 illustrates constitution of a multimedia content transmitting and receiving system according to an embodiment. Referring to FIG. 1, the multimedia content playing system includes a plurality of transmission devices 200-1, 200-2 and a reception device 100.

The transmission devices 1, 2 200-1, 200-2 transmit different signals through different paths. Referring to FIG. 1, the transmission device 1 200-1 transmits first signals through a broadcasting network and the transmission device 2 200-2 transmits second signals through a communication network 10.

The first and second signals may be arranged with real-time transport stream which respectively include different data to each other. For example, regarding 3D content, left-eye or right-eye image may be included in first real-time transport stream and transmitted through the broadcasting network, and the other image may be included in second real-time transport stream and transmitted through the communication network. The first data included in the first signals and the second data included in the second signals may be implemented as various types of data as well as left-eye and right-eye images. For example, the data may be divided into video data and audio data, video data and subtitle data, or other additional data, and transmitted as first and second real-time transport streams respectively.

The reception device 100 receives real-time transport streams which are respectively transmitted from the transmission devices 1, 2 and performs buffering. During the process, at least one of real-time transport streams are delayed and synchronized with each other.

Meanwhile, the second real-time transport stream transmitted through the communication network 10 may be streamed with various types of streaming methods such as real time protocol (RTP) or hypertext transfer protocol (HTTP). A method for obtaining the second real-time transport stream will be described below.

Further, the first real-time transport stream includes first synchronizing information along with the first data and the second real-time transport stream includes second synchronizing information along with the second data.

Various information may be used as first and second synchronizing information. Specifically, at least one of content start information to inform start point of multimedia content, difference value of time stamps between the first data and the second data, frame index, time code information, coordinated universal time (UTC) information, and frame count information may be used as synchronizing information.

According to MPEG standard, transport stream for transmitting broadcasting data may include program clock reference (PCR) and presentation time stamp (PTS). PCR indicates reference time information so that a reception device such as set-top box or TV according to MPEG standard adjusts time standard to that of a transmission device. The reception device adjusts a value of system time clock (STC) according to PCR. PTS indicates time stamp to inform playing time for synchronizing image and voice in a broadcasting system according to MPEG standard. This will be referred herein as time stamp. When different signals are transmitted through the different transmission devices 200-1, 200-2, PCR may be different according to features of the transmission devices 200-1, 200-2. Therefore, even if playing may be performed according to time stamp adjusted for PCR, synchronizing may not be performed. Considering this, the system may include synchronizing information in each of real-time transport streams which are transmitted through different paths. The reception device 200 may adjust time stamp of image frame included in each of transport streams using the synchronizing information or sync-play by directly comparing the synchronizing information.

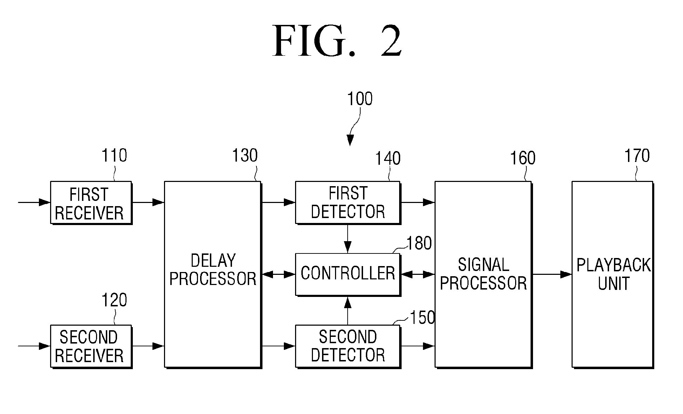

FIG. 2 is a block diagram of a reception device according to an embodiment. Referring to FIG. 2, the reception device 100 includes a first receiver 110, a second receiver 120, a delay manager 130, a first detector 140, a second detector 150, a signal processor 160, a playback unit 170 and a controller 180.

The first receiver 110 receives the first real-time transport streams which are transmitted through the broadcasting network. The first receiver 110 may be implemented to include an antenna, a tuner, a demodulator, and an equalizer.

The second receiver 120 receives the second real-time transport stream by accessing external sources through the communication network. The second receiver 120 may include a network interface card.

The delay manager 130 delays at least one of the first and second real-time transport streams and synchronizes each other. The delay manager 130 may delay transport stream by using various methods such as personal video recorder (PVR), time shift, or memory buffering.

When using memory buffering, the delay manager 130 may delay stream by using buffer separately mounted within the reception device 100 or buffer mounted internally within the delay manager 130. For example, when the first real-time transport streams are first received and the second real-time transport streams are not yet received, the delay manager 130 stores and delays the first real-time transport streams on the buffer. In this situation, when the second real-time transport streams are received, the delay manager 130 reads the delayed first real-time transport streams from the buffer and provides them with the second real-time transport streams to the first and second detectors.

The delay manager 130 may analyze each stream so as to adjust timing of providing the first and second real-time transport streams to the first and second detectors 140, 150, respectively. In other words, the delay manager 130 may analyze stream to determine how much delay is provided to at least one of the first and second real-time transport streams. For example, the delay manager 130 may confirm parts to be synchronized with each other in the first and second real-time transport streams by using information such as content start information, time stamp difference value, or time stamp regarding each stream. Further, the delay manager 130 may confirm parts to be synchronized with each other by comparing information such as frame index or time code of the two streams.

The delay manager 130 adjusts delay situation so that timing of providing the confirmed parts to the first and second detectors 140, 150 can be matched with each other.

Information such as content start information, time stamp difference value, frame index and time code are the synchronizing information and these may be received as being included in each stream or received in a form of private stream. The delay manager 130 may determine duration of delay by using the synchronizing information and delay according to the determining results.

The first detector 140 detects the first data from the first real-time transport stream and the second detector 150 detects the second data from the second real-time transport stream. The detectors provide the first and second data to the signal processor 160.

The signal processor 160 generates multimedia content by combining the first and second data. Specifically, when the first data is video data and the second data is audio data, the signal processor 160 decodes each data and provides the result to a display unit and a speaker within the playback unit 170 respectively. Therefore, the two data may be outputted at the same time.

Further, when the first data is left-eye image and the second data is right-eye image, the signal processor 160 may process data variously according to 3D display methods. In the case of a polarized display type, the signal processor 160 may generate one or two frames by alternately arranging part of the synchronized left-eye and right-eye images. Therefore, corresponding frames may be outputted through a display panel to which lenticular lens or parallax barrier is added. Meanwhile, in the case of a shutter glass type, the signal processor 160 may alternately arrange the left-eye and right-eye images and consecutively display the images on a display panel.

The playback unit 170 plays multimedia content processed in the signal processor 160. The playback unit 170 may include at least one of the display unit and the speaker according to types of the reception device 100, or may be implemented as interface connected with an external display apparatus.

The controller 180 may delay first-received stream by controlling the delay manager 130. Further, the controller 180 may control the signal processor 160 to perform operation of playing multimedia content by combining the first and second data.

Specifically, when synchronizing information is included in each of the first and second real-time transport stream, the controller 180 may control the signal processor 160 to adjust at least one of time stamp regarding each frame included in the first data and time stamp regarding each frame included in the second data using the synchronizing informations, and generate multimedia content by combining each frame of the first and second data according to the adjusted time stamp.

According to embodiments, the controller 180 may directly compare time code or frame index without adjusting time stamp and may control the signal processor 160 so that frames which have same time codes or frame indexes can be played.

Besides, the controller 180 may control operation of each unit included in the reception device 100.

The signal processor 160 and the controller 180 can perform synchronization jobs in which frames corresponding to each other can be sync-played by using synchronizing information included in the first and second real-time transport streams.

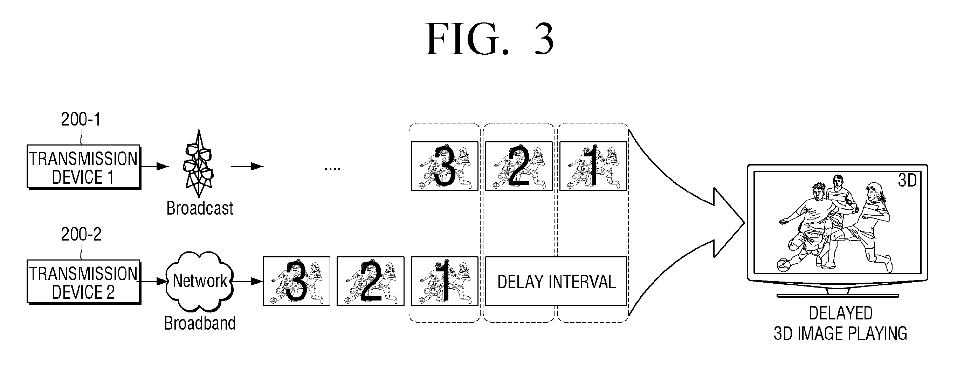

FIG. 3 is provided to explain a process for adjusting synchronization by delaying at least one of a plurality of real-time transport streams at the reception device of FIG. 2. Referring to FIG. 3, the transmission device 1 200-1 transmits real-time transport stream through the broadcasting network and the transmission device 2 200-2 transmits real-time transport stream through the communication network. Even when the transmission time points are the same, one of the two streams can arrive first due to environmental difference between the broadcasting network and the communication network. FIG. 3 illustrates that the first real-time transport stream transmitted through the broadcasting network is delayed for two frames and synchronized with the second real-time transport stream. Therefore, 3D images delayed for about two frames are played.

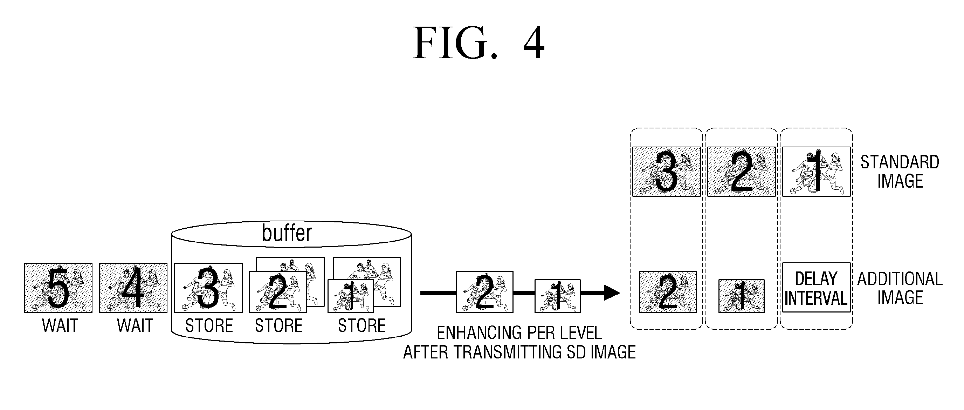

FIG. 4 is provided to explain another embodiment of reducing delay time. Referring to FIG. 4, in the transmission device 2 200-2 for transmitting the second real-time transport stream, the images to be transmitted are divided into various sizes of access units, delay time is reduced by first transmitting the smallest size of image, and screen quality of the images to be transmitted is enhanced by considering communication situation. FIG. 4 illustrates that SD level frame is transmitted as first frame and HD level frame is transmitted as next second frame. Comparing with FIG. 3, delay time is reduced for about one frame.

Size of image resolution may be different according to status of the communication network. In other words, when communication bandwidth is insufficient or communication speed is late, the smallest resolution of data is first transmitted resolution of data can be large gradually as illustrated in FIG. 4 to minimize delay time. Therefore, the second real-time transport stream includes a plurality of data units which have at least one of size adaptively established according to situation of the communication network. Audio data, as well as video data, may be transmitted by determining data size differently according to situation of the communication network. Thus, the reception device 100 may perform synchronization while minimizing delay time of the plurality of real-time transport streams.

Meanwhile, as described above, the second real-time transport stream may be transmitted and received by using protocols such as RTP or HTTP.

When using HTTP, metadata files should be provided to obtain the second real-time transport stream.

Streaming by using HTTP is a streaming method which minimizes loads of server by counting on clients' processing. The second receiver 120 completes streaming by using transmission requests for HTTP files or parts of the files. The transmitting side should put files which are compressed at several transmission rates regarding one content on the server to adaptively respond to changes in transmission rates of the network. Further, in order to quickly respond to changes in situation of the network, whole content files should be divided into plural items and the plural items should be stored as files. The transmitting side should provide metadata to inform how can load the divided plural files and play multimedia content to the receiving side.

Metadata is information to inform where multimedia content can be received. Metadata files may be divided variously according to types of HTTP based streaming.

Regarding a smooth streaming method, ISM (Internet information service (IIS) smooth streaming Media) files are used as metadata files.

Regarding IETF (an internet engineering task force) HTTP live streaming method, m3v8 files are used as metadata files. Regarding an adaptive HTTP streaming Rel. 9 method which is applied in 3GPP, an adaptive HTTP streaming Rel. 2 method which is applied in OIPF, and a dynamic adaptive streaming over HTTP method which is applied in MPEG, media presentation description (MPD) may be used as metadata files.

Metadata files may include information which clients should previously recognize such as position on content time corresponding to the divided plural files, URL of sources providing corresponding files, and sizes, and so on.

According to an embodiment, address information regarding sources that metadata files can be obtained may be included in the first real-time transport stream.

Meanwhile, when using RTP, processes of receiving metadata and requesting stream with metadata information are deleted. However, processes of delay-processing parts of stream and synchronizing parts of stream by using synchronizing information may be applied uniformly to the embodiment using RTP.

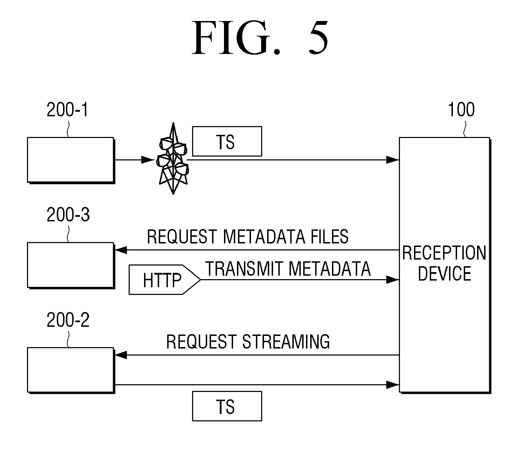

FIG. 5 is provided to explain a method of providing metadata files according to an embodiment. Referring to FIG. 5, the transmission device 1 200-1 transmits the first real-time transport stream (TS) including address information through the broadcasting network.

The reception device 100 confirms information regarding server which provides metadata files by detecting address information. When the reception device 100 having constitution of FIG. 2 is implemented, the first detector 140 may detect address information and provide to the second receiver 120.

The second receiver 120 accesses server 200-3 within the communication network by using address information. The server 200-3 transmits metadata files according to a request of the second receiver 120. The second receiver 120 accesses second real-time transport stream source 200-2 by using the metadata files, requests and receives transmission of the second real-time transport stream. As described above, the metadata files include information regarding sources of the second real-time transport stream.

Address information may be included and transmitted in various areas of the first real-time transport stream. According to a dynamic adaptive streaming over HTTP method (DASH), address information may be URL information such as Hybrid3DURL or Hybrid3DMetaURL. Address information may be recorded and transmitted in various sections of the first real-time transport stream.

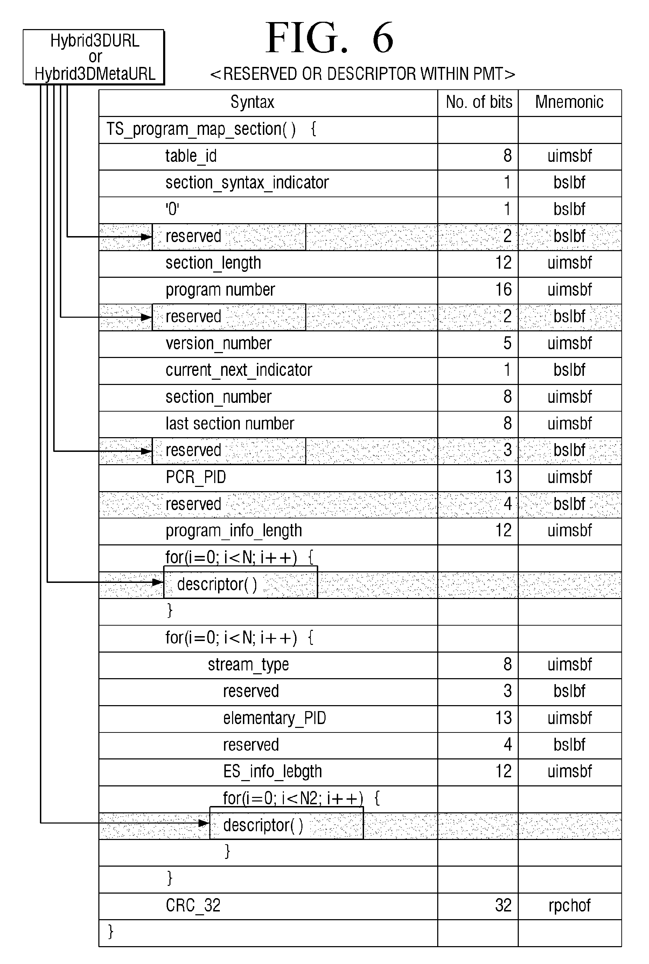

FIGS. 6 to 9 illustrate examples which address information may be transmitted by using various areas within the first real-time transport stream.

Referring to FIG. 6, address information may be recorded in reserved area or descriptor area within program map table (PMT).

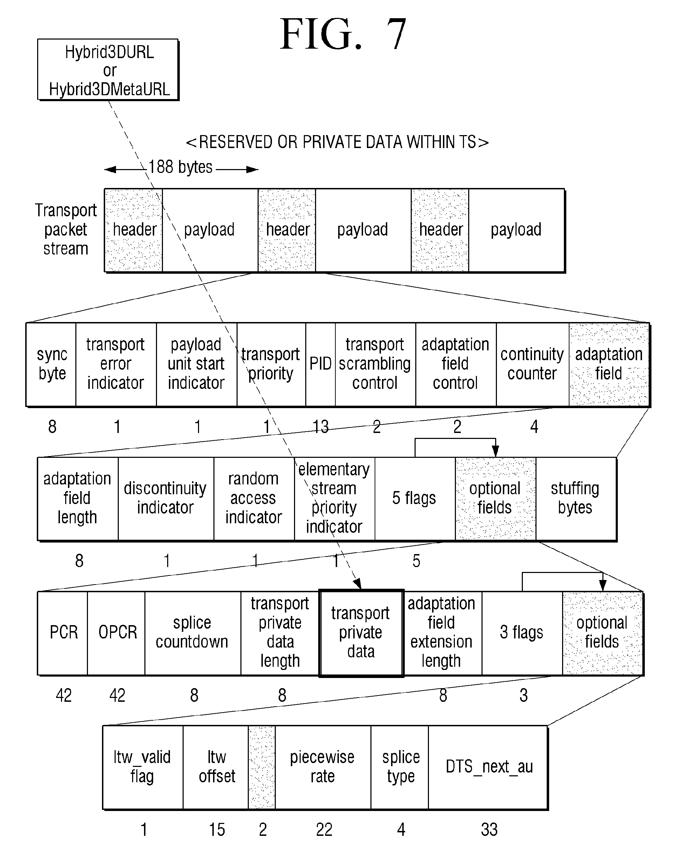

Further, referring to FIG. 7, address information may be recorded in reserved area of the first real-time transport stream or in private data area of the first real-time transport stream.

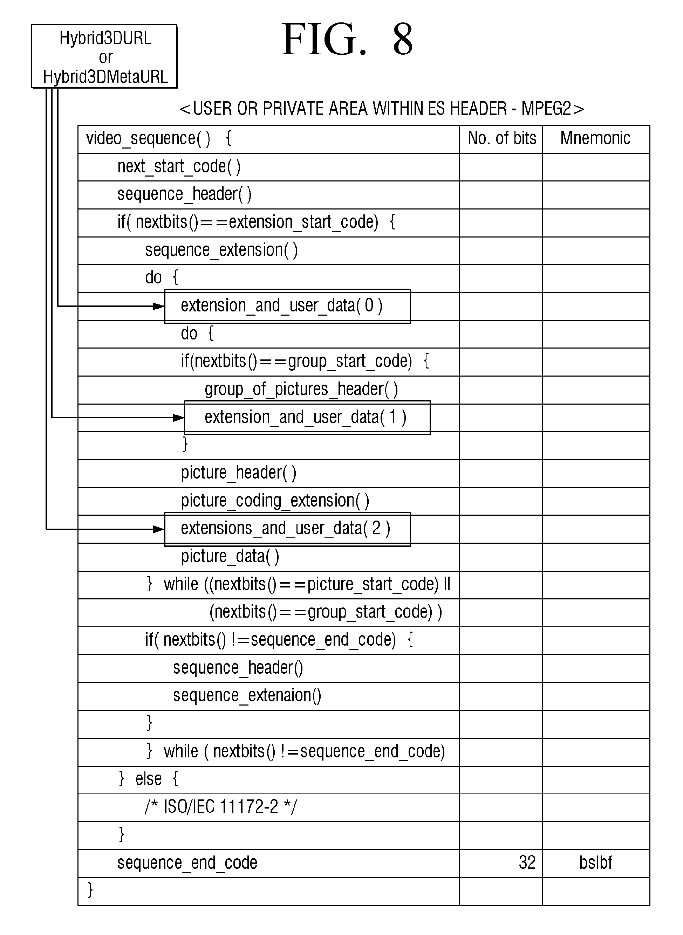

Further, referring to FIG. 8, address information may be recorded in user data area or private area within ES header.

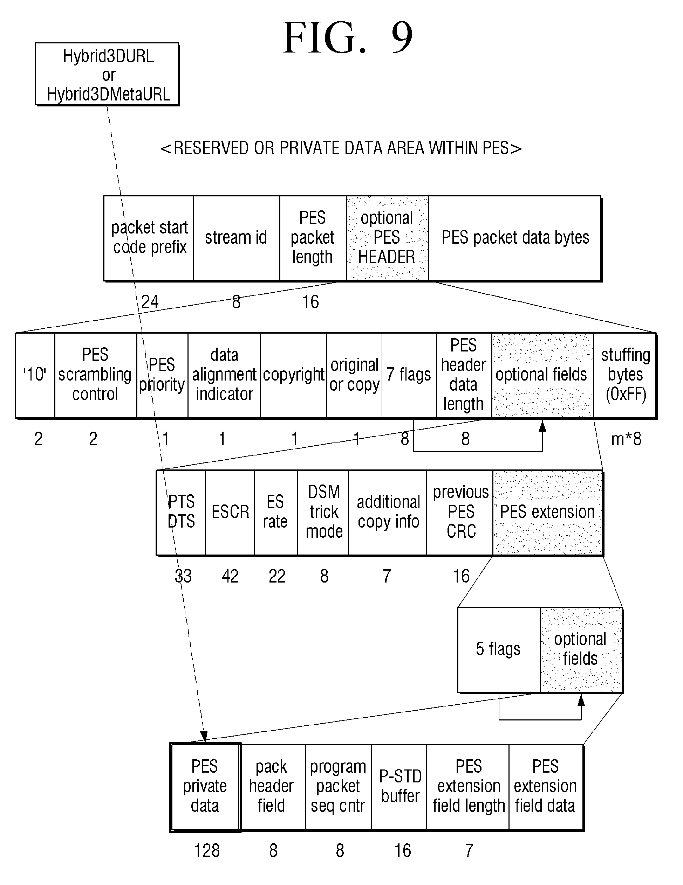

Further, referring to FIG. 9, address information may be recorded in reserved area or private data area within program elementary stream (PES) of the first real-time transport stream.

Besides, according to H.264 standard, address information may be recorded in at least one of supplemental enhancement information (SEI).

Such address information indicates sources which metadata files can be obtained, i.e., address information regarding server.

The reception device 100 accesses corresponding source by using address information included in the first real-time transport stream and receives metadata files from corresponding source. When another separate server to manage metadata files is used, metadata files may be updated more easily.

Metadata files may include packet identifier (PID) information basically. Additionally, respective link information provided for interoperateing services with other channels may be included. Such link information may be link_original_network_id which is original network ID of 3D additional image service connected with corresponding channel, linked_carrier_frequency which is wireless frequency value to provide 3D image service channel or additional image service, link_logical_channel_number which is logical channel number to provide 3D additional image service connected with corresponding channel, link_transport_stream_id which is identifier to identify transport stream on the network, link_service_id which is identifier to identify service within transport stream, link_url_indicator which is identifier to inform url information, link_source_URL which is URL address to provide 3D adding image and information of corresponding content, and link_service_start_time which is time when linking service of NRT service or downloading is provided.

Besides, metadata files may include modulation information of provided broadcasting stream. Modulation information may be SCTE_mode_1:64-QAM, SCTE_mode_2:256-QAM, ATSC(8VSB), and AVSB(16VSB).

Meanwhile, as described above, if the second real-time transport stream are transmitted through the communication network, the transmitted second real-time transport stream should be synchronized with the first real-time transport stream. Therefore, information which can adjust playing time of the second data included in the second real-time transport stream is requested. Such information may be added to metadata files. Specifically, information such as linkedContent indicating that content needs to be synchronized and played, playableRestriction indicating that content request is impossible through streaming channel before time point of sync-playing, and designatedPlayTime providing correct time of playing start or start time offset may be included and transmitted in metadata files.

Herein, designatedPlayTime follows to UTC format. The reception device 100 limits playing of the second data before playing start time obtained by designatedPlayTime and performs sync-playing by using synchronizing information to sync-play.

Meanwhile, metadata files include synchronizing information. Such information may be added as component of period level. Synchronizing information may be startPTS, PTSdiff, and frame index.

startPTS indicates time stamp at the point where multimedia content start. startPTS may be called as content start information in view of that it is information indicating start point of multimedia content. PTSdiff indicates difference value between time stamp allocated on each frame of the first real-time transport stream and time stamp allocated on each frame of the second real-time transport stream.

Frame index indicates index of each image frame within the second real-time transport stream. When frame index is divided into plural periods, frame index indicates frame index at starts point of each period. Further, standard of index becomes the first frame of the streaming file, in which index = 1. Consecutively, frame index is allocated. Index information is established uniformly with frame index of image frame transmitted from the first real-time transport stream.

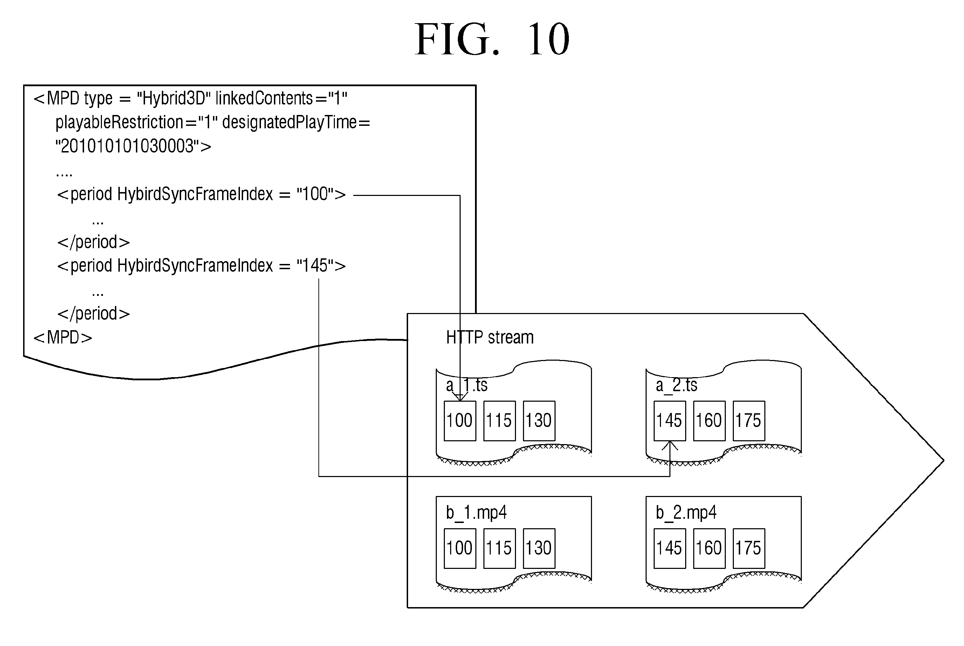

FIG. 10 illustrates an example of a method for expressing MPD files which includes frame index information. Referring to FIG. 10, frame index information is included in MPD files. When different signals are received through different paths, time stamps of data to implement uniform content may be different due to time difference while signal-processing and transmitting. At this process, when frame index information is recognized, the reception device 100 may compensate time stamps of frames having uniform frame index in the first and second data to be the same value. Further, frame index are compared with each other and played to perform synchronization if they are the same.

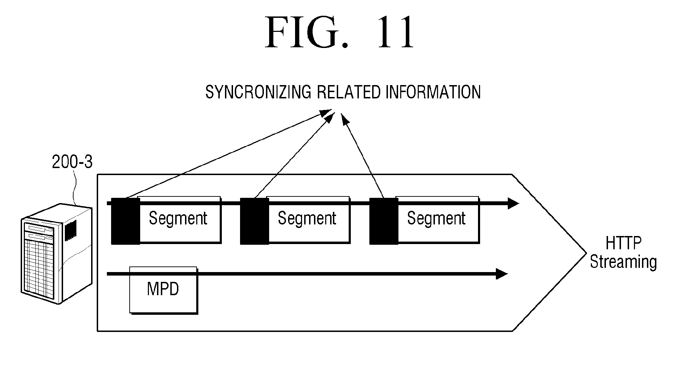

FIG. 11 illustrates HTTP streaming structure which divides and transmits synchronizing information on a segment basis. Referring to FIG. 11, the transmission device 200-3 may provide synchronizing information with MPD. As described above, synchronizing information may include content start information to inform start point of multimedia content, difference value of time stamps between the first and second data, and frame index.

Such synchronizing information may be included and transmitted in each of the first and second real-time transport stream. However, when being included in metadata files, synchronizing time point can be recognized before transmitting the second real-time transport stream.

Thus, the first and second data respectively included in the first and second real-time transport stream are processed together to generate one multimedia content. Therefore, the first and second data are suggested to be produced together.

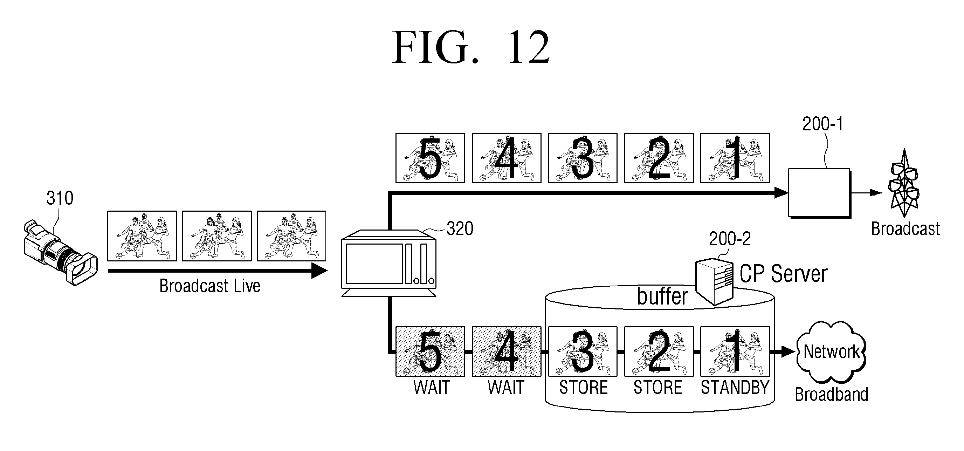

FIG. 12 is provided to explain a transmitting process of producing the first and second data together and transmitting through different paths. Referring to FIG. 12, multimedia content photographed by one camera 310 is divided into the first and second data. The divided data are respectively encoded by an encoder 320 and respectively provided to the different transmission devices 200-1, 200-2. Thus, the first data which corresponds to standard image is encoded by the encoder 320 and provided to the transmission device 1 200-1. The transmission device 1 200-1 converts corresponding data into transport stream and broadcasts in RF signal format through the broadcasting network.

The second data which corresponds to additional image is divided and encoded on an access unit basis and provided to the transmission device 2 200-2. The transmission device 2 200-2 buffers corresponding data and transmits to the reception device 100 through the communication network. The transmission device 2 200-2 may be called as content provide server. The transmission device 2 200-2 stores data provided from the encoder 320 by buffering size. When there is a request of the reception device 100, requested data is provided to the reception device 100.

Although FIG. 12 illustrates one encoder 320, the number of the encoder 320 may be implemented as plural the same as number of data.

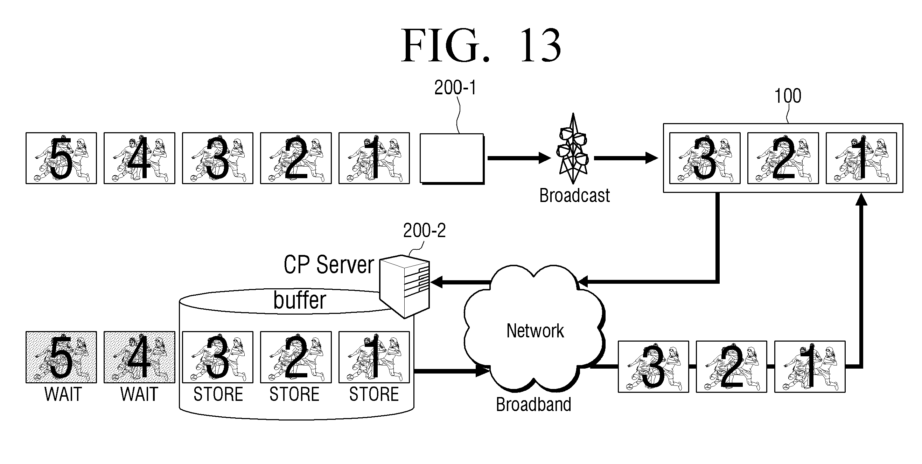

FIG. 13 is provided to explain a process of transmitting and receiving the first and second data. Referring to FIG. 13, the first real-time transport stream including the first data is broadcasted by the transmission device 1 200-1 and transmitted to the reception device 100. After detecting address information included in the first real-time transport stream, the reception device 100 obtains metadata files by using corresponding address information. The reception device 100 requests the second data by accessing the transmission device 2 200-2 with the metadata files.

The transmission device 2 200-2 transmits the second real-time transport stream including the second data to the reception device 100 according to the request. The second data includes a plurality of data units which have at least one of size adaptively established according to situation of the communication network. In other words, the transmission device 2 200-2 adaptively determines size of the second data by considering situation of the communication network, specifically, communication bandwidth or communication speed.

When the second data is video data, resolution of image stored in the buffer may be determined by considering communication bandwidth. Communication bandwidth may be measured while transmitting and receiving requests between the reception device 100 and the transmission device 2 200-2. The transmission device 2 200-2 selects image optimized for the network situation such as SD level or HD level image by considering the measured bandwidth and transmits to the reception device 100. Therefore, delay may be minimized.

Meanwhile, as described above, the first and second real-time stream may include synchronizing information with data. Synchronizing information may be at least one of content start information, difference value of time stamps between the first and second data, frame index, time code information, UTC information, and frame count information.

In an embodiment which content start information is used as synchronizing information, the reception device 100 recognizes start point of multimedia content by using the information. When the reception device 100 is implemented as in FIG. 2, the signal processor 160 may perform such operation.

The signal processor 160 may compare the start point with time stamp of frame included in the first data and time stamp of frame included in the second data respectively. According to the comparing results, frame index of each data may be detected, and synchronization may be performed with the detected frame index.

Even when time stamp of L2 frame in the first signals and time stamp of R2 frame in the second signals are different to each other, L2 frame and R2 frame are synchronized with each other to generate n+1 frame if the difference between the time stamp of L2 frame and the start point of content which the first and second signals generate is the same as the difference between the time stamp of R2 frame and the start point.

The signal processor 160 may detect frame index by comparing content start information with time stamp. For example, in the first signals, if content start information (PTSH_Start) is 100 and time stamp (PTS) of left-eye image L1 frame is 100, PTS - PTSH_Start = 0. If PTS of next left-eye image L2 frame is 115, PTS-PTSH_Start = 15. In this case, the signal processor 160 puts time stamp interval as 15, and matches L1 frame with nth frame and L2 frame with n+1th frame. Meanwhile, in the second signals, assume that content start information is 300, time stamp of R1 frame is 300, and time stamp of R2 frame is 330, the signal processor 160 puts time stamp interval as 30, and matches R1 frame with nth frame and R2 frame with n+1th frame.

The signal processor 160 compensates time stamp of right-eye image frame or left-eye image frame s to be uniform o that time stamps of the two frames can be matched.

The right-eye image frame of the frame is matched with next frame of the left-eye image frame. The signal processor 160 compensates time stamp of the right-eye image frame to be uniform with time stamp regarding the next frame of the left-eye image frame and synchronizes with each other.

According to another embodiment, difference value between time stamps of the two data may be used as synchronizing information. In other words, first synchronizing information and second synchronizing information may respectively include difference value between time stamps of the left-eye and right-eye images. In this case, the signal processor 160 compensates at least one of time stamps of the left-eye and right-eye images by considering the difference value and synchronizes with each other.

Content start information and time stamp difference information may be recorded in event information table (EIT), PMT, private stream, and transport stream header. Further, the above several embodiments explain that real-time transport stream are transmitted; however, such synchronizing information may be recorded in media header box (mdhd) or decoding time to sample box (stts) when the first data or the second data is transmitted as MP4 file which is unreal-time stream. When being transmitted as MP4, the signal processor 160 may calculate frame rate by using time scale or duration, and synchronize playing time by comparing the calculated frame rate. Thus, time scale recorded in mdhd within MP4 file is 25000 and data recorded within stts is 1000, 1000/25000 is calculated as frame rate. Therefore, because frame is played per 1/25 second, comparative play timing difference between the two signals may be recognized. The signal processor 160 may synchronize the two signals by using comparative play timing and start point.

According to another embodiment, frame index information may be used as synchronizing information. Frame index information indicates identifying information allocated to each frame. The signal processor 160 may perform compensation so that time stamps of frames having the same frame index can be uniform.

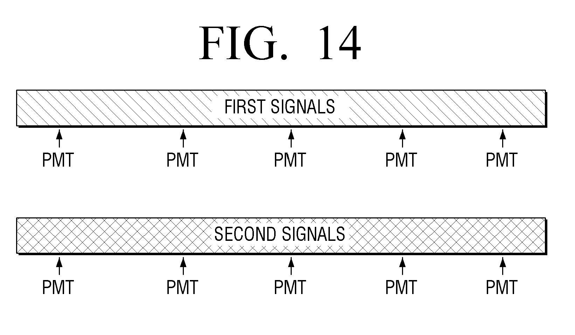

FIG. 14 illustrates constitution of stream including PMT. Referring to FIG. 14, PMT is included periodically within the first and second signals which are transmitted from the transmission devices 200-1, 200-2 respectively. Various synchronizing information such as the above described content start information, time stamp difference value, and frame index may be included and transmitted within PMT.

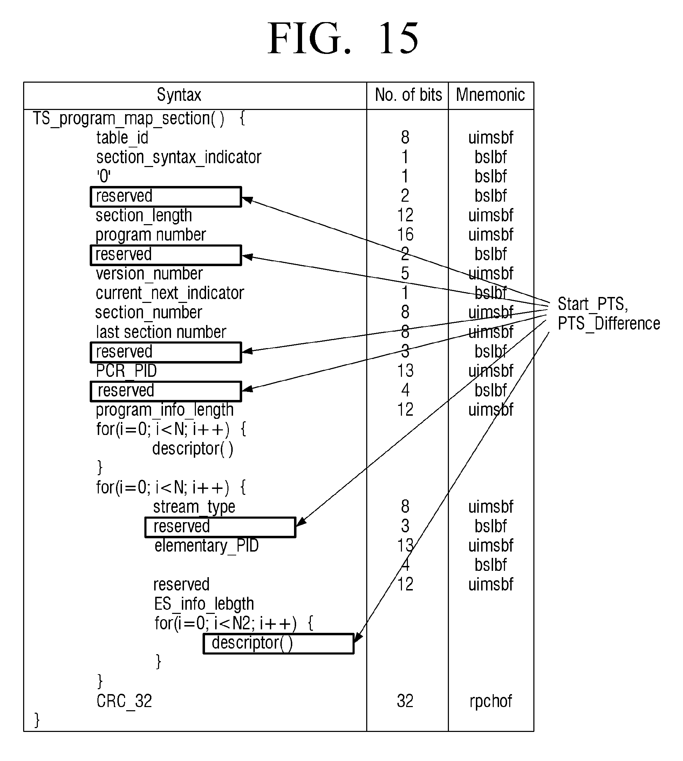

FIG. 15 illustrates PMT structure. Referring to FIG. 15, respective synchronizing information may be transmitted by using reserved area, new descriptor, or expanded area of previous descriptor within PMT.

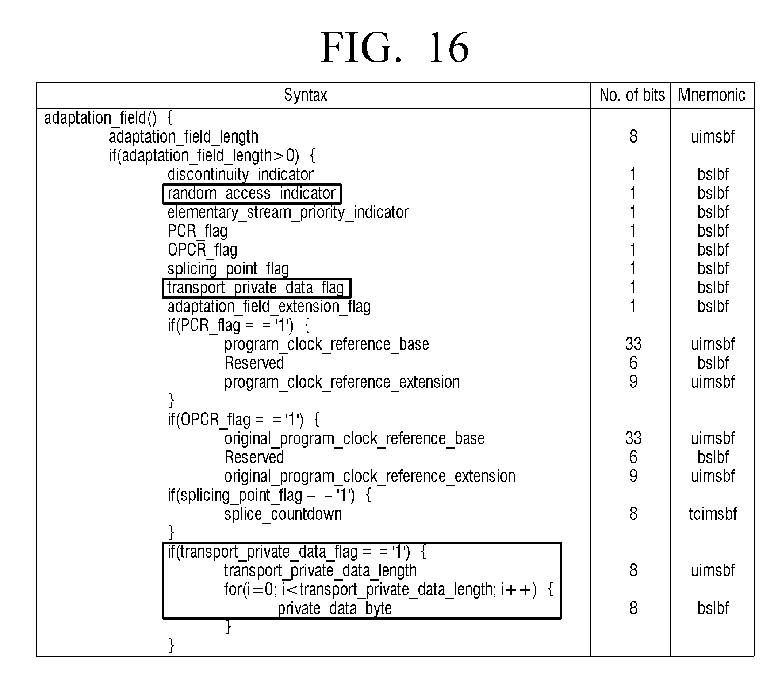

FIG. 16 is provided to explain a method of transmitting respective synchronizing information by using adaptation field of transport stream. In FIG. 16, random_access_indicator, transport_private_data_flag, and private_data_byte are included within the adaptation field. random_access_indicator is implemented as 1 bit, and indicates start of sequence header if being set as 1. transport_private_data_flag is also implemented as 1 bit, and indicates that private data is included over 1 byte if being set as 1. private_data_byte is implemented as 4 to 5 bytes, and may include synchronizing information such as content start information, time stamp difference value, and frame index.

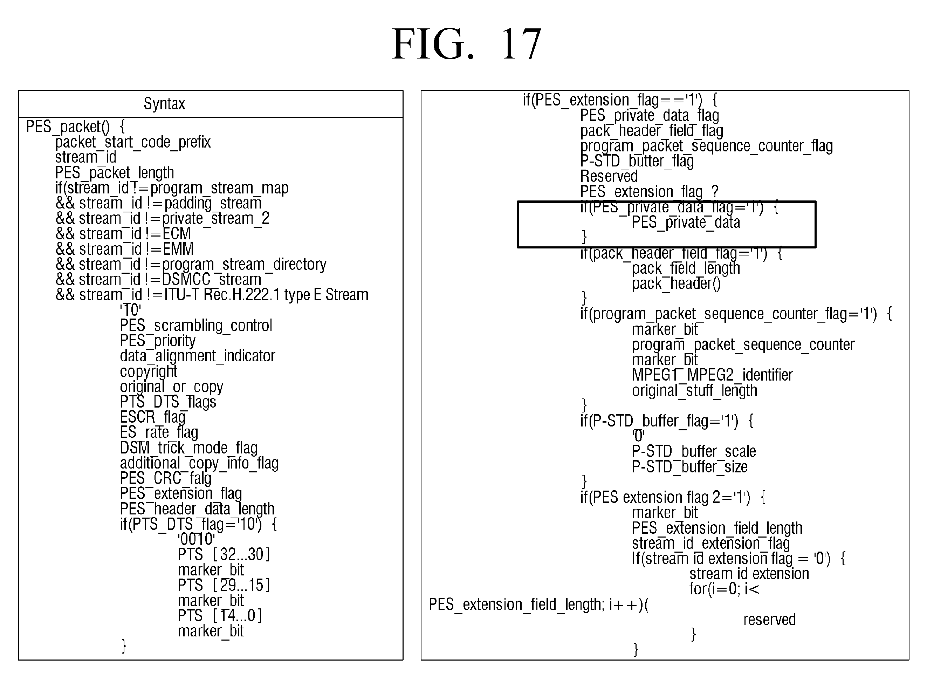

FIG. 17 illustrates a method of delivering synchronizing information by using PES header. PES packet header may record and transmit respective synchronizing information on PES_private_data because it is provided on a frame basis. Referring to FIG. 17, PES_private_data may be set as 1 and synchronizing information may be recorded on PES_private_data.

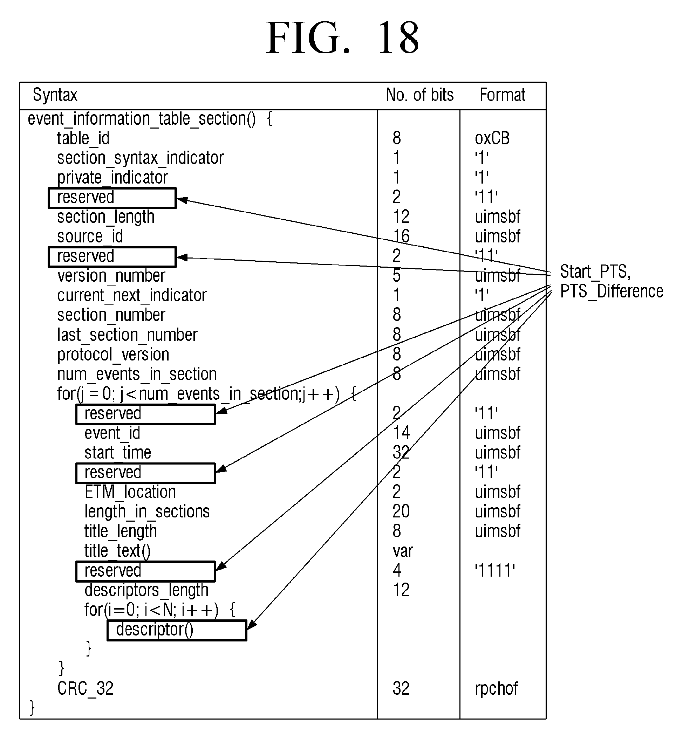

FIG. 18 illustrates a method of delivering synchronizing information such as content start information, time stamp difference value, and frame index by using EIT. Such information may be recorded and transmitted on reserved area of EIT or expanded area of new or previous descriptor.

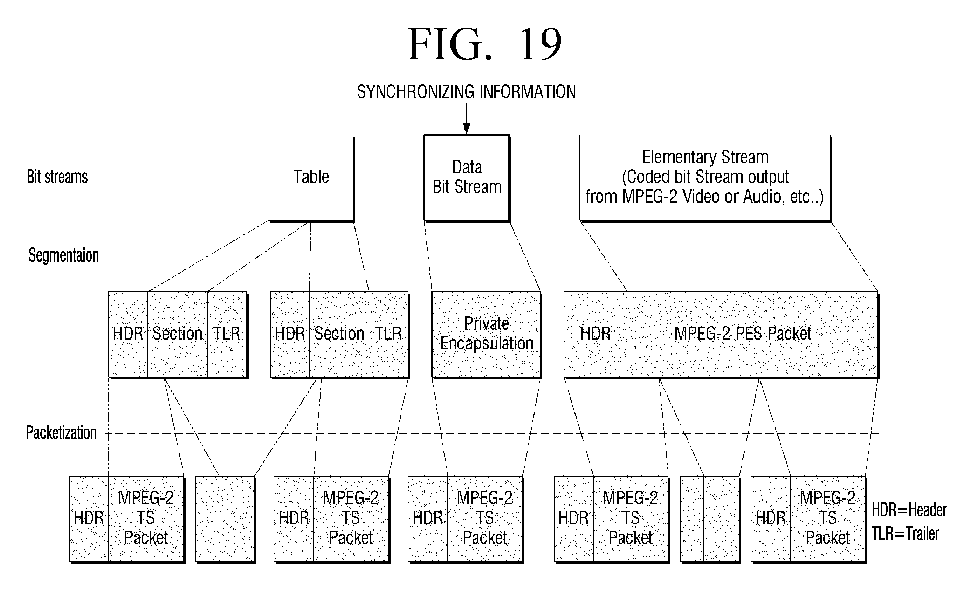

FIG. 19 illustrates a method of delivering synchronizing information by using private stream. As illustrated in FIG. 19, private stream which synchronizing information such as content start information, time stamp information and frame index information are recorded, i.e., data bit stream may be included and transmitted separately from PES. In this case, reserved value as well as predefined 0xBD and 0xBF may be used as stream ID of PES header. Besides, time code, UTC or frame count information may be transmitted by using private stream, which will be further described below.

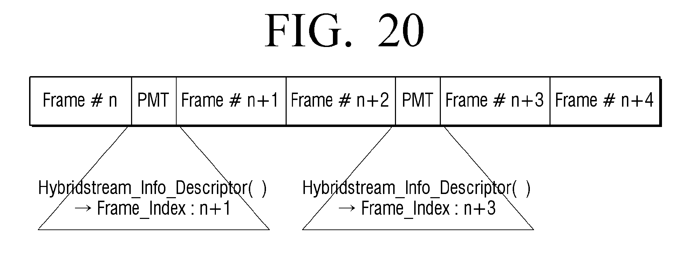

FIG. 20 illustrates an example of transport stream structure which includes frame index among synchronizing information. According to MPEG standard, transport stream transmit video, audio and other extra data. Information of each program is recorded on PMT.

Although FIG. 20 illustrates structure which frame index is inserted in PMT, frame index may be inserted in video stream header, audio stream header, and TS header according to another embodiment. Referring to FIG. 20, frame index of next frame is recorded in each PMT. When more than two PMT are provided between the frames, value of Hybridstream_Info_Descriptor() indicates the same frame index. If Descriptor() can be inserted based on I frame basis in a multiplexer of the transmission device, overlapping with data may be prevented.

The reception device 100 may detect frame index by considering each PMT, and respectively synchronize frames of the first and second signals. Meanwhile, when data is transmitted in unreal-time transport stream format rather than real-time transport stream format, frame index may be provided in a different method from the above.

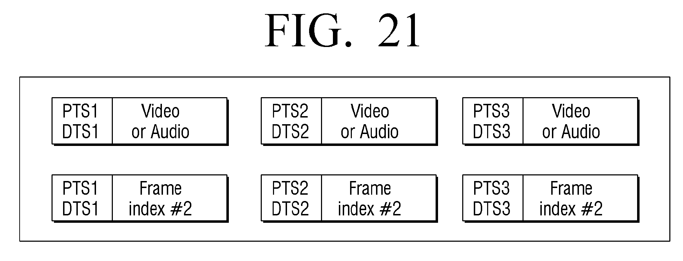

FIG. 21 illustrates an example of transmitting frame index through private stream. As illustrated in FIG. 21, private stream separately from multimedia stream such as video or audio may be provided in the first signals, and frame index value to be synchronized with the second signals may be provided through corresponding private stream. In this case, if the second signals are also real-time transport stream having the same structure of FIG. 21, frame index may be detected from private stream of corresponding transport stream and synchronized.

According to another embodiment, time code, UTC information, and frame count information may be used as synchronizing information.

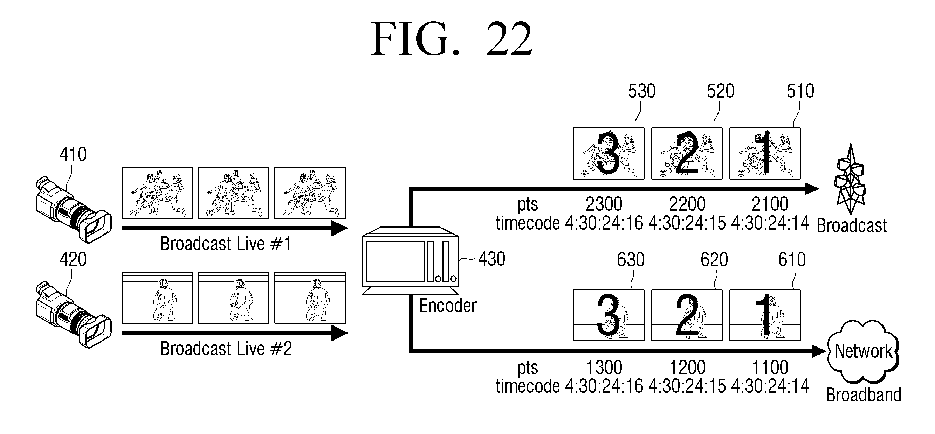

FIG. 22 illustrates a method of transmitting at a real time by using time code of image photographed in a plurality of cameras. Referring to FIG. 22, the first and second data photographed by the plurality of cameras are respectively encoded and transmitted through the broadcasting network or the communication network. In this case, when data includes the same image, uniform time code is allocated to corresponding data frames. In other words, time codes are uniformly generated regarding frames 51, 52, 53 of the first data and frame 61, 62, 63 of the second data even though time stamps, i.e., PTS are different with each other. Such time codes may be used as synchronizing information at the receiving side.

Time code is a series of pulse signals which are generated by a time code generator, and signal standard developed for easy editing and managing. When producing and editing content, uniform time code is used for sync-managing left-eye and right-eye images. Therefore, time code may keep uniform pair regardless of stream generation or transport time point.

Specifically, Society of Motion Picture and Television Engineers (SMPTE) time code may be used. At SMPTE 12M, time code is expressed in "hour:minute:second:frame" format. SMPTE time code may be divided into longitude time code (LTC) or vertical interval time code (VITC) according to a recording method. LTC is recorded according to a moving direction of tapes. Regarding LTC, total 80 bits of data may be generated by including time information (25bits), user information (32bits), synchronizing information (16bits), storing area (4bits), and frame mode expressing (2bits). VITC is recorded on two horizontal lines within vertical blanking interval of video signals.

SMPTE RP-188 defines interface standard that time code of LTC or VITC type can be transmitted as ancillary data. Thus, time code and additional information related with time code may be newly defined and transmitted according to the interface standard.

Additional information related with time code may be time code of other images that are provided if time codes of the left-eye and right-eye images are not the same, 2D/3D converting information to inform whether current image is dimensional or not, and start point information of dimensional image. Such additional information may be provided through user information area or reserved area (non-assigned area). Further, regarding media excluding time code, time code dimension may be expansively defined and used in network protocol. For example, time code may be provided through RTP header extension.

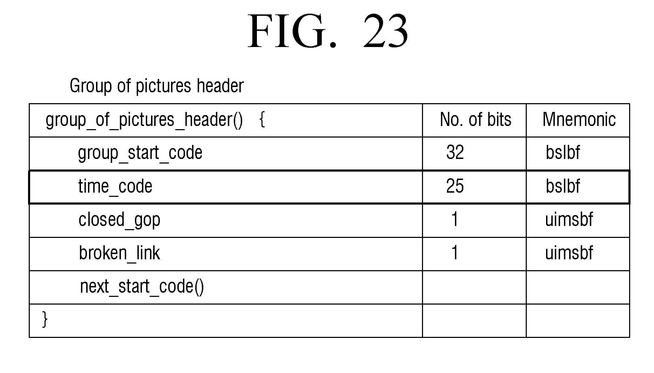

FIG. 23 illustrates an example of GoP header syntax structure within MPEG stream that time code is recorded within GoP header. Referring to FIG. 23, time code may be recorded as 25 bits of data. As illustrated in FIG. 23, time code may be delivered on GoP basis to the reception device 100.

Further, time code may be recorded on private stream and transmitted. Thus, private stream which time code is recorded, i.e., data bit stream may be included separately from PES and transmitted. In this case, reserved value may be used as stream ID of PES header other than predefined 0xBD and 0xBF. Besides, UTC or frame count information may be similarly transmitted as time code.

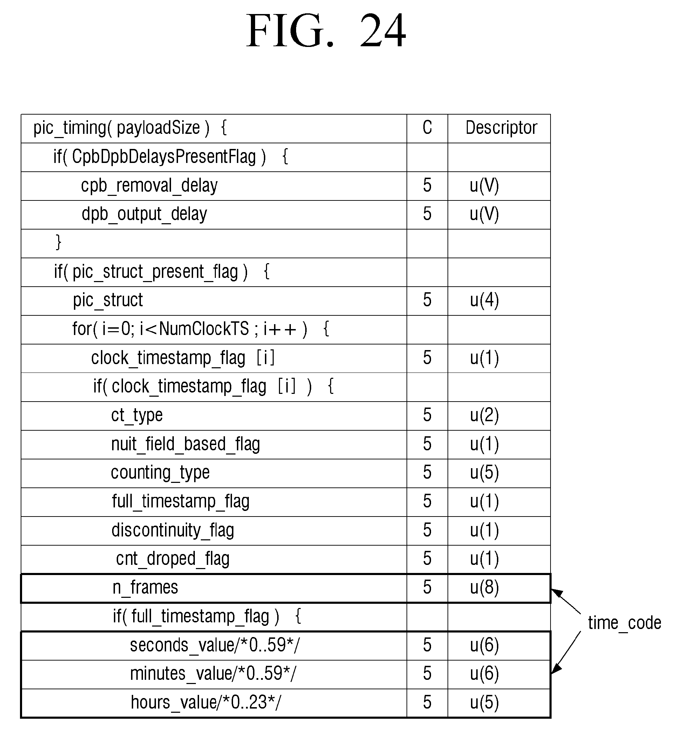

FIG. 24 illustrates stream structure in case which time code is provided by using video stream. Referring to FIG. 24, time code may be transmitted by using SEI defined in advanced video coding: ISO/IEC 14496-10 (AVC). As illustrated in FIG. 24, time code may be delivered by using seconds_value, minutes_value, hours_value, and n_frames defined in picture timing SEI.

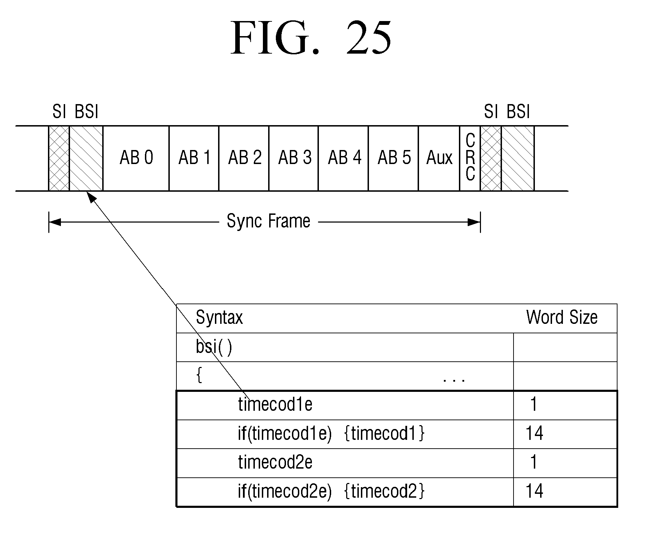

FIG. 25 illustrates stream structure in case which time code is provided by using audio stream. As illustrated in FIG. 25, audio stream has structure which sync frame is consecutively arranged according to AC-3 (ATSC A/52: 2010).

Bit stream information (BSI) area to provide sync frame information among the sync frame structure may provide information regarding time code.

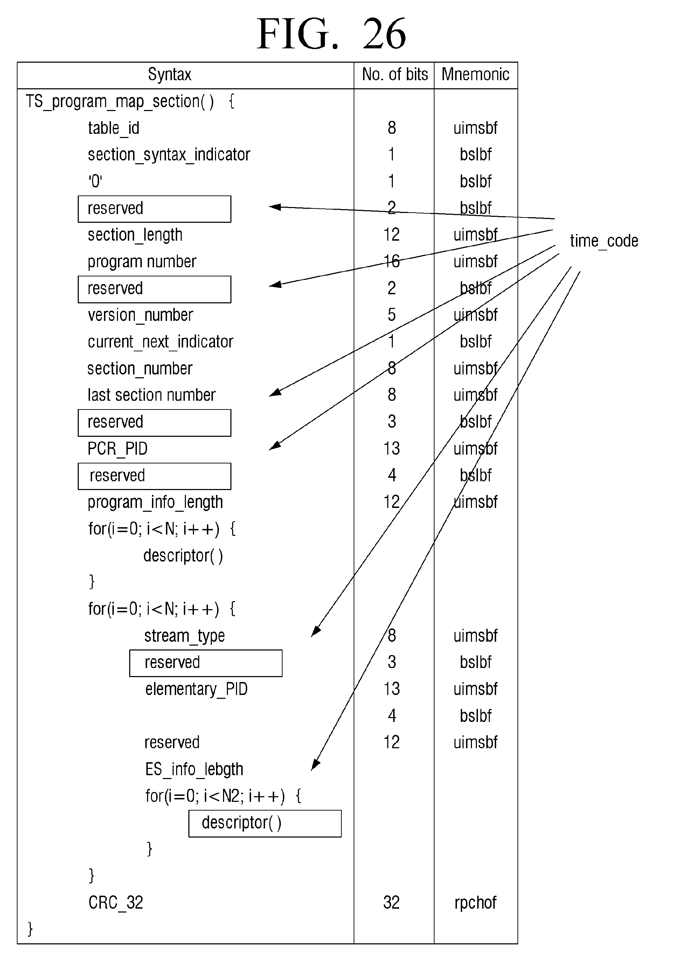

FIG. 26 illustrates PMT syntax in case which time code is provided through PMT. Referring to FIG. 26, time code may be provided through reserved or descriptor of PMT which is periodically transmitted. Interval of providing PMT may be performed based on GoP to allocate the synchronized time code or frame. Although FIG. 20 illustrates that PMT is transmitted per two frames, PMT including time code may be provided per one frame. As described above, various information may be used as synchronizing information, and its position may be established variously.

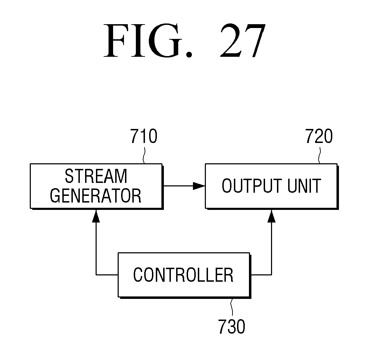

FIG. 27 is a block diagram describing an example of a transmission device which transmits real-time transport stream. The transmission device of FIG. 27 may be implemented as any one of transmission device 1 or transmission device 2 in the system of FIG. 1. However, the following will explain based on the case that the transmission device is implemented as transmission device 1 for convenient explanation. The transmission device includes a stream generator 710, the output unit 720, and the controller 730.

The stream generator 710 generates the first real-time transport stream including the first data and first synchronizing information. The first data may be one of left-eye and right-eye images. In this case, the second data which is the other image of the left-eye and right-eye images may be provided to the reception device from another transmission device. Therefore, the first and second data may be combined to express 3D image. According to embodiments, the first data may be at least one of video data, audio data, script data and additional data which generate multimedia content. Further, the first synchronizing information is information to adjust synchronization between the first data and the second data. Types of the first synchronizing information are already described above, which will not be further explained.

The output unit 720 transmits the generated stream in the stream generator 710 to the reception device 100. Detailed constitution of the output unit 720 may be implemented differently according to types of stream. For example, when the transmission device of FIG. 27 is broadcasting transmitting device, the output unit 720 may be implemented to include RS encoder, an interleaver, a trellis encoder, and a modulator. Further when the transmission device of FIG. 27 is web server which transmits stream through network such as internet, the output unit 720 may be implemented as network interface module which communicates with the reception device, i.e., web client according to HTTP protocol.

The controller 730 controls the output unit 720 to delay output timing of the first real-time transport stream so as to be adjusted for output timing of another transmission device. Herein, another transmission device indicates device which transmits the second real-time transport stream including the second data and second synchronizing information. The second data indicates data to generate one multimedia content with the first data.

Information regarding output timing may be adjusted by sharing time information of broadcasting programs. For example, there are various stream generators such as a broadcasting station which transmits video and audio, a third party which transmits additional data such as scripts, and another third party which provides relevant games. One of such stream generators may transmit time plan based on time code toward other generators. Each stream generator may generate and add synchronizing information to transport stream by using the time plan, and adjust with other transmission devices by delaying transport timing of transport stream. Such time plan or synchronizing information is frame basis information which has correctness for synchronizing stream generating sides differently from the time schedule provided from conventional EPG.

Further, each stream generator may download and share standard time, i.e., PCT through the conventional standard server. Therefore, when transmitting performs on the same timing or when its communication speed is faster than that of the other transmission devices, transmitting speed may be delayed. Further, regarding frames of the same content, DTS and PTS may be generated and added.

The controller 730 controls the stream generator 710 and the output unit 720 to perform the above delay operation and synchronizing information generating operation.

For convenient explanation, FIG. 27 explains that the transmission device which transmits stream including the first data delays transmission. However, another transmission device which transmits stream including the second data may delay transmission. In this case, another transmission device may have constitution of FIG. 27.

Further, when the transmission device delays stream transmission as illustrated in FIG. 27, the reception device may not need process delaying after receiving stream. In view of the whole system including the transmission device and the reception device, operation of delaying stream processing may be performed only by the transmission device or only by the reception device. Therefore, when the transmission device delays stream transmission as illustrated in FIG. 27, the reception device may not be implemented as constitution of FIG. 1.

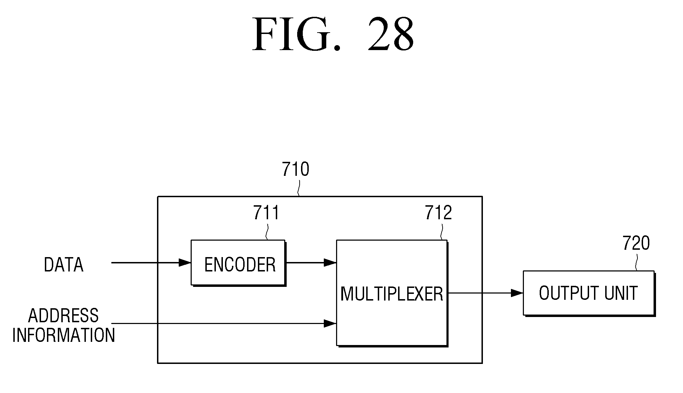

FIG. 28 is a block diagram describing constitution of a transmission device which transmits real-time transport stream according to HTTP streaming method. Referring to FIG. 28, the transmission device includes the stream generator 710 and the output 720, and the stream generator 710 includes an encoder 711 and a multiplexer 712.

The stream generator of FIG. 28 generates the first real-time transport stream including the first data and address information. Address information indicates information regarding metadata files that the second data constituting multimedia content with the first data can be obtained in the communication network. Specifically, it may be URL information regarding the server which provides metadata files.

The encoder 711 receives the first data from content producers. The encoder 711 encodes the first data and provides to the multiplexer 712. The multiplexer 712 generates the first real-time transport stream by multiplexing the encoded first data and address information.

Meanwhile, when transmitting synchronizing information together, the encoder 711 may be provided with signaling information from content producers. Signaling information indicates basic information requested for generating synchronizing information. The encoder 711 generates synchronizing information by using the signaling information and adds to the encoded first data.

When the synchronizing information is content start information, the encoder 711 generates time stamp of the initial frame based on PCR and adds the time stamp as synchronizing information. Further, when difference value of time stamps are used as synchronizing information, the signaling information may be implemented as information regarding PCR of another transmission device which generates and transmits the second data. Based on the signaling information, the encoder 711 may generate difference value of time stamps between the first and second data as synchronizing information and add to the encoded first data.

Meanwhile, if time code is used as synchronizing information, the first data and synchronizing information may be inputted to the encoder 711 without other signaling information. The encoder 711 encodes the first data and synchronizing information without additional processing and provides to the multiplexer 712. Further, the address information may be inputted to the encoder 711 together and encoded with the first data.

Besides, constitution of performing video data compression according to MPEG standard may be added to the stream generator 710; however, illustration and description of such constitution are not included herein.

The multiplexer 712 generates transmission data by muxing additional data to the generated data in the encoder 711. Additional data may be PSIP and EPG information.

The output unit 720 performs channel decoding and modulating regarding the transport stream provided from the multiplexer 712, converts to transport signals, and transmits through channels. For modulating, 8VSB method which is used in ground broadcasting and 16VSB method which is high data rate method for cable TV may be used.

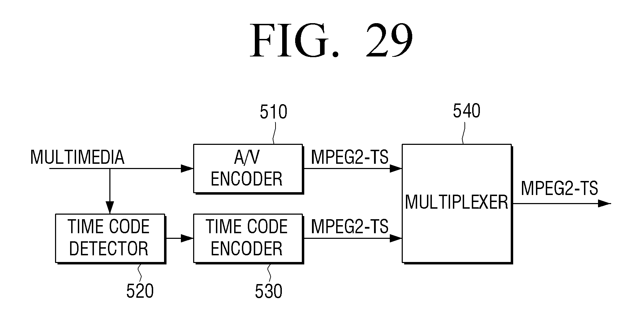

FIG. 29 illustrates constitution of a transmission device according to another embodiment. The transmission device of FIG. 29 processes time code as separate private stream and transmits. Referring to FIG. 29, the transmission device includes audio/video (A/V) encoder 510, a time code detector 520, a time code encoder 530, and a multiplexer 540.

A/V encoder 510 encodes A/V data included in the inputted multimedia data. Encoding method may be different according to a standard applied to the transmission device.

The time code detector 520 detects time code of image from the inputted multimedia data and provides to the time code encoder 530. The detected time code may be stored as time line data file. In this case, various additional information as well as time code may be detected together and provided to the time code encoder 530.

The time code encoder 530 encapsulates the detected time code in proper transmission format, combines presentation time stamp calculated by using the same program system clock as A/V encoder 510, and synchronizes with A/V data processed in A/V encoder 510.

Time code information processed in the time code encoder 530 is provided to the multiplexer 540 with A/V data processed in A/V encoder 510. The multiplexer 540 multiplexes such data and outputs MPEG2-TS.

Although not illustrated in FIG. 29, various other units such as a pilot inserter, a modulator, an interleaver, a randomizer, and RF upconverter may be added to the transmission device. This constitution may be considered as normal constitution of the transmission device, which will not be further illustrated and explained.

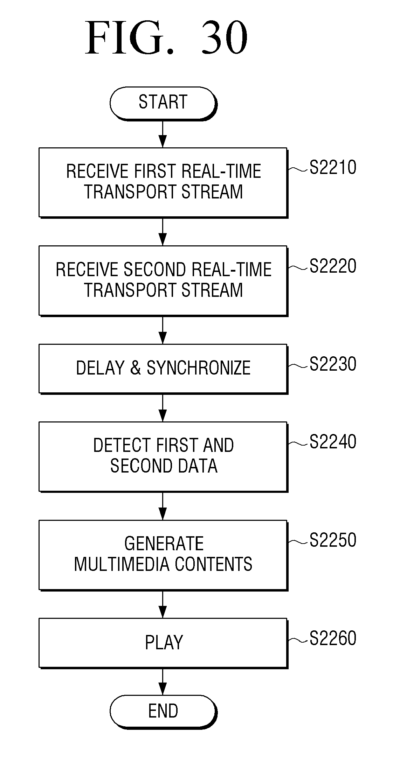

FIG. 30 is a flowchart explaining a method of playing multimedia content according to an embodiment.

Referring to FIG. 30, when the first real-time transport stream are received through a communication network at S2210 and the second real-time transport stream are received through another communication network at S2220, at least one of the two stream are delayed and synchronized with each other at S2230.

At S2240, the first data and the second data are detected from each of the two streams. The detected first and second data are combined to generate multimedia content at S2250 and multimedia content are played at S2260.

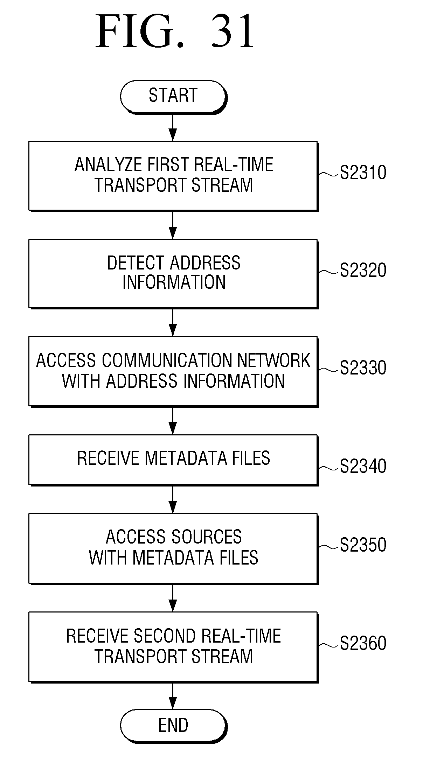

FIG. 31 is a flowchart specifically explaining a method of receiving the second real-time transport stream. Referring to FIG. 31, when the first real-time transport stream are received, the first real-time transport stream are analyzed at S2310 and address information is detected at S2320. Thus, the communication network is accessed by using the detected address information at S2330.

Therefore, metadata files are received from server corresponding to the address information at S2340, and sources are accessed by using the metadata files at S2350. At S2360, the second real-time transport stream are received from corresponding sources.

The first and second real-time transport stream may include synchronizing information respectively. Further, because constitution of metadata files and recording position of the address information within the stream are explained specifically in the above, it will not be further described.

Further, the first and second data may be data constituting 3D content such as left-eye and right-eye images, or parts of data constituting one multimedia content such as video, audio and scripts, as described above.

A program to implement the methods according to the above various embodiments may be stored and used in various types of recording medium.

Specifically, codes to implement the above methods may be stored in various types of recording medium that can be read by a terminal such as random access memory (RAM), flash memory, read only memory (ROM), erasable programmable ROM (EPROM), electronically erasable and programmable ROM (EEPROM), register, hard disk, removable disk, memory card, USB memory, and CD-ROM.

Further, the foregoing exemplary embodiments and advantages are merely exemplary and are not to be construed as limiting the present invention. The present teaching can be readily applied to other types of apparatuses. Also, the description of the exemplary embodiments of the present inventive concept is intended to be illustrative, and not to limit the scope of the claims.

## Claims

1. A reception device, comprising:
a first receiver which receives a first real-time transport stream through a broadcasting network;
a second receiver which receives a second real-time transport stream through a communication network;
a delay manager which synchronizes by delaying at least one of the first and second real-time transport streams;
a first detector which detects a first data from the first real-time transport stream;
a second detector which detects a second data from the second real-time transport stream;
a signal processor which generates a multimedia content by combining the first and second data; and
a playback unit which plays the multimedia content.

2. The reception device of claim 1, wherein the first real-time transport stream comprises address information, and the second receiver receives metadata files from server by accessing the server within the communication network with the address information and receives the second real-time transport stream by using the metadata files, and the metadata files comprise information regarding sources of the second real-time transport stream.

3. The reception device of claim 2, wherein the address information is recorded on at least one of: reserved area within PMT of the first real-time transport stream, descriptor area within PMT, reserved area of the first real-time transport stream, private data area of the first real-time transport stream, reserved area within PES of the first real-time transport stream, private data area within PES of the first real-time transport stream, user area within ES header, private area within ES header, SEI if according to H.264 standard.

4. The reception device of claim 1, wherein the second data comprises a plurality of data units having at least one of size established adaptively according to situation of the communication network.

5. The reception device of any of claims 1 to 4, wherein one of the first data and the second data comprises left-eye image and the other comprises right-eye image, and the multimedia content is 3D content.

6. The reception device of claim 5, wherein the first real-time transport stream comprises first synchronizing information, the second real-time transport stream comprises second synchronizing information, and the first and second synchronizing information comprise at least one of content start information to inform start point of the multimedia content, difference value of time stamps between the first data and the second data, and frame index.

7. The reception device of claim 6, further comprising:
a controller which controls the signal processor to compensate at least one of time stamps in each frame included in the first data and time stamps in each frame included in the second data by using the first and second synchronizing information, and generate the multimedia content by combining each frame of the first and second data.

8. The reception device of claim 5, wherein the first real-time transport stream comprises first synchronizing information, the second real-time transport stream comprises second synchronizing information, and the first and second synchronizing information are time code information of image frames.

9. A transmission device, comprising:
a stream generator which generates a first real-time transport stream comprising a first data and first synchronizing information;
an output unit which outputs the first real-time transport stream; and
a controller which controls the output unit to delay output timing of the first real-time transport stream adjusted for output timing of other transmission devices which output second real-time transport stream,
wherein the second real-time transport stream comprises a second data and second synchronizing information, the first and second data are data to generate one multimedia content, and the first and second synchronizing information are information transmitted for synchronization of the first and second data.

10. A transmission device, comprising:
a stream generator which generates a first real-time transport stream comprising a first data and address information; and
an output unit which outputs the first real-time transport stream,
wherein the address information is address information regarding metadata files that a second data generating multimedia content with the first data is obtained on a communication network.

11. A method of playing multimedia content at a reception device, comprising:
receiving a first real-time transport stream from a broadcasting network;
receiving a second real-time transport stream from a communication network;
delaying at least one of the first and second real-time transport streams and synchronizing each other;
detecting a first data from the first real-time transport stream and detecting a second data from the second real-time transport stream;
generating a multimedia content by combining the first and second data; and
playing the multimedia content.

12. The playing method of claim 11, wherein the receiving the second real-time transport stream through the communication network comprises,
detecting address information included in the first real-time transport streams;
receiving metadata files from a server by accessing the server within the communication network with the address information; and
receiving the second real-time transport stream by accessing sources of the second real-time transport stream with the metadata files.

13. The playing method of claim 12, wherein one of the first and second data comprises a left-eye image and the other comprises a right-eye image, and the multimedia content is 3D content.

14. The playing method of claim 11, wherein the second data comprises a plurality of data units which have at least one of sizes established adaptively according to situation of the communication network.

15. The playing method of claim 14, wherein the first real-time transport stream comprises first synchronizing information, the second real-time transport stream comprises second synchronizing information, and the first and second synchronizing information comprise at least one of content start information to inform start point of the multimedia content, difference value of time stamps between the first data and the second data, frame index, and time code.
